# EUROPEAN PATENT APPLICATION

(11) **EP 4 588 343 A1**
(43) Date of publication of application: **23.07.2025**
(21) Application number: 23864848.9
(22) Date of filing: 06.09.2023
(51) Int. Cl.: A01K 5/00

(54) **DEVICE FOR EXTRACTING FOOD FROM AN ANIMAL FEEDER**

(30) Priority: 13.09.2022 ES 202231486 U
(71) Applicant: Gimenez Garcia-Courtoy, Alvaro, 14012 Córdoba Córdoba (ES)
(72) Inventor: Gimenez Garcia-Courtoy, Alvaro, 14012 Córdoba Córdoba (ES)
(74) Representative: Ungria López, Javier
(86) International application number: PCT/ES2023/070541
(87) International publication number: WO 2024/056925

(57) **Abstract**

The present invention relates to a device for extracting food from a tank of an animal feeder where it is designed to be fastened. The device comprises an opening (5), which in turn comprises a frame (6), formed by a U-shaped sheet that has a hole (7) located in each wing of the U-shape, and a food extracting mechanism that is fastened to the frame (6) with the ability to rotate. The food extracting mechanism comprises a trap door (10, 11, 18) joined to a tube (9) to house a shaft (8) that is fastened to the frame (6) through the holes (7).

## Description

### OBJECT OF THE INVENTION

The present invention relates to a device, adaptable to any type of animal feeder, designed to extract food from the feeder, making it a feeder solely and exclusively for boars.

It is particularly applicable in the industry of devices for feeding free-roaming animals.

### BACKGROUND OF THE INVENTION AND TECHNICAL PROBLEM TO BE SOLVED

Feeders designed to feed free-ranging animals, or at least animals that are not confined, are already known in the state of the art.

Document US2016088817A1 describes a device for feeding animals, which has a programmable timer to control the electrical actuator that moves the lid between the open position and the closed position. It comprises a feed hopper supported above a feed tray for the supply of a feed material by gravity. A cover is provided with an open position for allowing access by an animal to the feed material and a closed position preventing an animal from accessing the feed material in the trough. It is used for feeding animals in remote locations such as deer, elk, cattle, sheep, raccoons and boars.

Document US7895973B1 discloses an animal feeder with a system that uses an electronic circuit to identify authorised animals and permits regulated access to food while restricting access by unauthorised users or animals. The system adjusts the feeding time of each animal, automatically calibrating the maximum daily feeding time for each individual animal based on the feeding behaviour of animals, which varies depending on size, age, appetite and anxiety.

Document US2008029034A1 discloses an automatic feeder that allows animals to feed only during certain predetermined periods of the day or night. It comprises a container having a substantially vertical hopper in communication with a horizontal feeding trough having an upper opening. It comprises a flat cover slidably disposed over said feeding trough and covering the upper opening. When said cover is retracted, the upper opening of the feeder (and any food situated therein) is exposed, allowing animals to access such food. The timer is connected to said slidable cover and can be programmed to open and close the cover at predetermined times that can be set by an operator. Alternatively, an optical sensor or other similar device can be used to limit the opening of the cover to certain daylight hours.

Document US2017142929A1 relates to an animal feeder with a selective food access system. It includes a cover configured to rotatably couple to the feeder, which rotates about a rotation axis between a first position in which the cover moves away from the opening of the feeder to allow access to the ingestible matter and a second position in which an opening of the feeder is covered. The selective access system further includes a force generator coupled to the cover to allow access only to animals such as boars that can lift it and which weight can be adjusted according to the size and strength of the animal.

These documents are focused on the feeding of any type of animal, so it is not possible to determine or decide which type of animal is to be fed in particular.

Document US2018098532A1 relates to a feeder similar to the previous one in which the selective access system includes a roller that, when lifted by the animal, allows access to the tank where the food is situated, thus being limited to a certain type of animal, such as boars, due to the effort required to gain access.

Document U202230056 discloses a tamper-proof, self-contained boar feeder that comprises a hopper for storing food with an orifice for food outlet and a main body on which the hopper is supported. The feeder comprises a fastening bracket designed to anchor the feeder to the ground and the main body comprises a chute, located under the orifice, for receiving food from the hopper, with one end protruding from the main body, a trap door, joined to the main body by means of a hinge, which supports and protrudes from the free end of the chute and rods, wherein the hopper comprises guides for guiding the rods designed to be assembled in the main body by means of anchors and a hinged lid that is fastened to the hopper by means of a padlock, and the main body comprises fastening elements for joining to the fastening bracket so that, once the main body is mounted on the fastening bracket and the hopper on the main body, access to the inside of the feeder is prevented and an animal can access the food from the chute by simply lifting the trap door.

The latter documents refer to feeders exclusively for boars. The configuration is especially focused on the strength that these animals have in their neck and their very narrow snout, a combination that prevents other animals from accessing the feeder and lifting the access lid, either because of the strength of their snout or because of their size.

In addition to these published documents, the most universal and widespread device in the state of the art is a device consisting of a drum of any type, containing food grain, and a Moultrie-type automated food dispenser coupled to its base, which dispenses the grain in a controlled manner. This assembly allows only a few programmed rations of food to be served daily, making it a very economical way of supplying food. In short, a user only needs a tank, of any shape and dimensions, in which a hole is made in the base and the dispenser is placed. For this reason of simplicity and economy, its use is extremely widespread. This assembly does not discriminate and all animals can eat.

The present invention consists of a device designed to be coupled to a drum which can optionally incorporate a dispenser, transforming it into a feeder designed solely and exclusively for boars. All this without the user having to purchase additional elements or having to make adaptations to the parts they already have.

### DESCRIPTION OF THE INVENTION

In order to achieve the objectives and avoid the disadvantages mentioned above, the present invention describes a device for extracting food from a tank of an animal feeder where it is designed to be fastened. The food is usually larger or smaller grains.

The device comprises, as the main element, an opening which, in turn, comprises a frame, formed by a sheet that, when bent, has a U-shaped configuration, and a food extracting mechanism, fastened to the frame with the ability to rotate.

To fasten the food extracting mechanism to the frame, on the one hand, the frame incorporates two holes in the opposite wings that form the U-shape. On the other hand, the food extracting mechanism comprises a tube that is located aligned with the two holes in the frame, between them. Thus, a shaft runs through the two holes and is inserted into the tube, giving the food extracting mechanism the ability to rotate. To keep the system fastened, the shaft has a head at one end, to be manipulated by a tool, while the other end is threaded, for the insertion of a nut.

**To** fasten the frame to the tank, the frame preferably has folds, on one of the perimeter edges, which incorporate orifices for the insertion of screws. **In** these cases, it is usually necessary to make an outlet orifice in the tank aligned with the edge of the frame to enable the food to exit the tank to the outside.

Optionally, the tank can be joined to a dispenser that supplies food according to a pre-determined pattern. **In** these cases, the device additionally comprises a container that is fastened to the tank by wrapping around the dispenser, so that it is inside the tank and therefore the food supplied by the dispenser falls into the container. By incorporating a dispenser, it is not necessary to make an outlet orifice in the tank for extracting the food to the outside, but rather it is the container that incorporates it to extract it through the opening. In this way, the frame is placed around the outlet orifice, which in turn is covered by the food extracting mechanism. The container is fastened to the tank by known means, usually by screws.

The frame is fastened to the container in the same way as described for fastening the frame directly to the tank, i.e., preferably by folds, on one of the perimeter edges, which incorporate orifices for the insertion of screws.

In a first embodiment, the food extracting mechanism comprises a first trap door, firmly joined to the tube so that it can oscillate and which, without being subjected to any stress, is in contact with the tank or the container, depending on where it is fastened, covering the outlet orifice on the outside.

To ensure that the first trap door is always in contact with the tank or the container, depending on the configuration, it preferably incorporates a ring by which it is attached to a spring at one end. The other end of the spring is fastened to a coupling fastened to the wall of the tank or container. However, one problem with this embodiment is that a boar can lift the first trap door and empty the food tank completely by simply holding it up.

In a second embodiment, the food extracting mechanism comprises, in addition to the first trap door, a second trap door that is firmly joined to the first trap door by means of the tube, forming an angle.

Furthermore, the first trap door can comprise apertures in order to allow the smell of the food to reach the outside more easily and to attract boars more effectively.

This mechanism, similar to the first embodiment, can also incorporate a spring which ends are fastened to the second trap door on the one hand, and to the tank or to the container via a coupling on the other. In this configuration, the spring acts on the second trap door and keeps the first trap door pressed against the tank or the container, closing the outlet orifice, so that an effort has to be made from the outside to lift it and open the outlet orifice for extracting food that is located between the second trap door and the outlet orifice. This avoids the problem of having only one trap door and an animal being able to empty the tank, as once the first trap door is lifted, the outlet orifice will be closed by the second trap door.

In a third embodiment, the food extracting mechanism comprises a mill configured as a plurality of third trap doors, evenly distributed around the tube , configuring compartments between them. In this way, when the boar pushes the third trap doors on the outside upwards, the trap doors inside the tank or the container draw food to the outside. With this configuration, there may also be a situation where at least one compartment between two of the third trap doors is blind, unable to draw food, causing the sweeping of food to be less continuous and slowing down the outlet of food from the container. The movement of the mill can be continuous or, preferably, discontinuous, so that when a boar pushes the third trap doors, food is supplied from only one compartment, so that it has to push again to get food from the next compartment. In this way, food rationing is achieved and a continuous outlet of food is prevented.

Furthermore, the dispenser must be accessible for programming or periodic servicing. For this reason, rather than having to uncouple the device from the tank to access the dispenser, there is preferably a way to access it without uncoupling anything, but simply by means of a padlock that locks a hinged system or similar.

The second and third embodiments of the food extracting mechanism can be located either on a side of the tank or at the base of the tank. In the case of the second embodiment, when placed at the base, the spring can be avoided, since in this case the outlet orifice is closed by the second trap door and the very weight of the trap door will close it perfectly.

### BRIEF DESCRIPTION OF THE FIGURES

To complete the description of the invention, and for the purpose of helping to make the features thereof more readily understandable, according to a preferred exemplary embodiment thereof, a set of drawings is included wherein, by way of illustration and not limitation, the following figures have been represented:

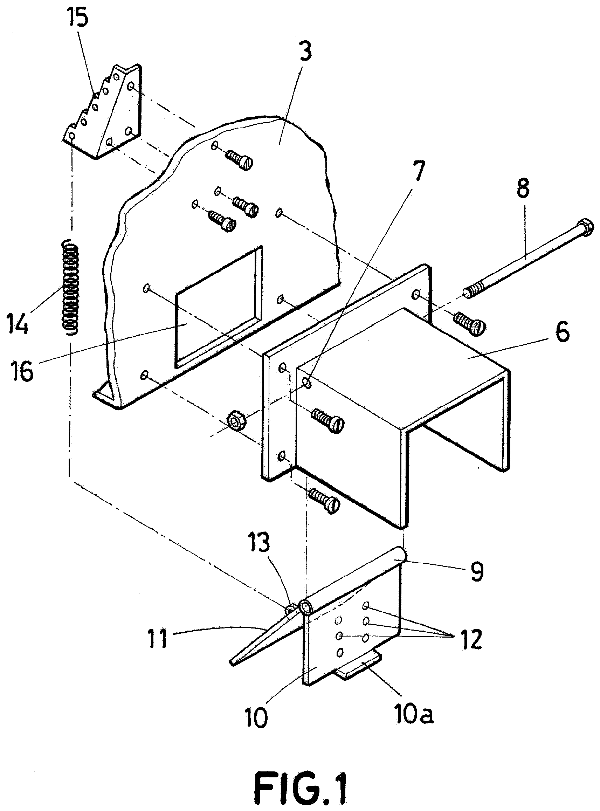

- Figure 1 shows an exploded perspective view of the opening of the device of the invention for fastening to the wall of the container in one of the embodiments.
- Figure 2 shows a perspective view of the device of the invention together with a food tank with dispenser and an enlarged detail of the opening shown in figure 1 already assembled.
- Figure 3 shows a sectional side view of the device of the invention assembled on the tank with dispenser of figure 2, wherein the opening is located on a side of the container and the second trap door is enabled to draw food from the container when the first trap door is opened.
- Figure 4 shows a sectional side view of the device of the invention assembled on the tank of figure 2 with the opening located at the base of the tank.
- Figure 5 shows a sectional side view of the device of the invention assembled on the tank, as in figure 4, with the difference that the opening is located on a side of the tank.
- Figure 6 shows the device of the invention in a second embodiment, as in figure 3, wherein the mechanism with two trap doors has been replaced by one with a plurality of third trap doors, in the form of a mill.

A list of the references used in the figures is provided below:
1. Tank.
2. Dispenser.
3. Container.
4. Lugs.
5. Opening.
6. Frame.
7. Holes.
8. Shaft.
9. Tube.
10. First trap door.
10a. Projection.
11. Second trap door.
12. Apertures.
13. Ring.
14. Spring.
15. Coupling.
16. Outlet orifice.
17. Mill.
18. Third trap door.

### DESCRIPTION OF PREFERRED EMBODIMENTS OF THE INVENTION

The present invention relates to a device that can be adapted to any type of animal feeder for extracting food, making it a feeder solely and exclusively for boars.

A first preferred embodiment of the invention is focused on adapting the device of the invention to a tank (1) which can be of any shape, size, appearance or configuration.

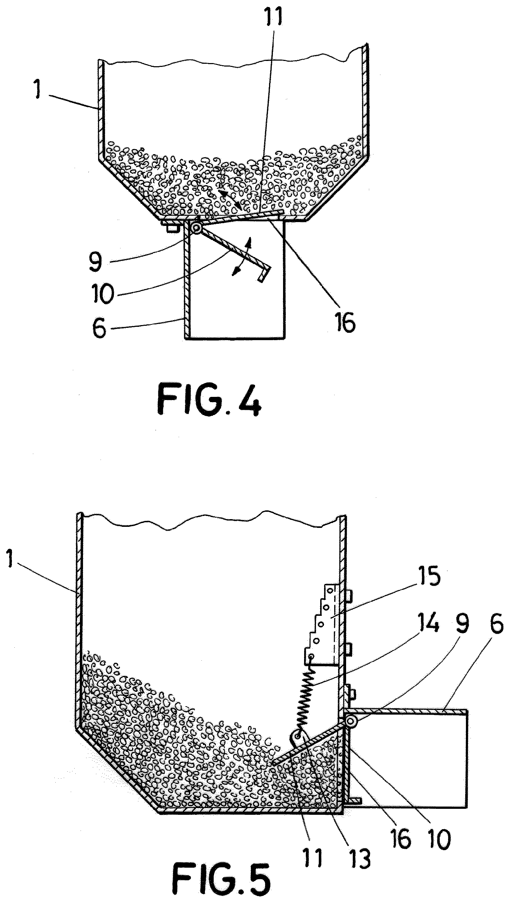

In this embodiment, the device can be fastened to a tank (1) at the bottom base, as shown in figure 4, or it can also be fastened to a tank (1) at a side, as shown in figure 5. The only adaptation of the tank to be able to fasten the device of the invention is that it must be provided with an outlet orifice (16) for extracting the food to the outside.

The device of the invention comprises an opening (5) which, in turn, comprises, on the one hand, a U-shaped frame (6) that incorporates a flange designed to house holes through which the frame (6) is screwed to the tank (1). The frame (6) is placed around the outlet orifice (16) of the tank (1) and also incorporates a hole (7) in each of the wings of the U-shape for the insertion of a shaft (8) that has a threaded end, for the insertion of a nut, and the other end ending in a head to be manipulated by a tool, so that the shaft (8) is stable.

On the other hand, the opening (5) also incorporates a food extracting mechanism that is fastened to the frame through the shaft (8) to be inside it, between the two holes (7).

In a second embodiment of the invention, the food extracting mechanism comprises a second trap door (11), firmly joined to the first trap door (10) by means of the tube (9), forming an angle between them.

As shown in figure 4, when the device is fastened to the base of the tank (1), the second trap door (11) closes the outlet orifice (16), both by gravity and by the force exerted on it by the weight of the grain inside the tank (1), while the first trap door (10) is located on the outside. In this way, when a boar detects the food, it pushes the first trap door (10) with its snout, displacing the second trap door (11) towards the inside of the tank (1), and food falls through the outlet orifice (16). Some grain may be located on the edge of the outlet orifice (16), so that the second trap door (11) cannot close completely; nevertheless, this is not a problem, but rather an advantage in that the smell of the food spreads more effectively to the outside and will attract boars more easily.

As shown in figure 5, when the device is fastened to a side of the tank (1), the second trap door (11) is housed inside the tank (1), while the first trap door (10) is positioned vertically, covering the outlet orifice (16) on the outside. It can be seen that the first trap door (10) incorporates a projection (10a) at the free end, with the aim that the boars push this projection (10a) to rotate it, opening the outlet orifice (16) and causing the second trap door (11) to rotate, which will draw the food located between it and the outlet orifice (16) so that it falls to the outside.

Since, due to gravity, the first trap door (10) cannot be positioned supported on the tank (1) without being subjected to stress when it is on a side of the tank, the second trap door (11) incorporates a ring (13) where one end of a spring (14) is fastened, the other end of which is fastened in a hole of a coupling (15) fastened to the tank (1) in an area above the outlet orifice (16).

The spring (14) exerts a force on the second trap door (11) towards the inside of the tank (1), causing the first trap door (10) to be pressed against the tank (1), closing the outlet orifice (16) on the outside. For its part, the coupling (15) incorporates a plurality of orifices so that the tension of the spring (14) and, therefore, the opening force of the first trap door (10) can be selected.

A third preferred embodiment of the invention is focused on adapting the device of the invention to a tank (1) that incorporates a dispenser (2).

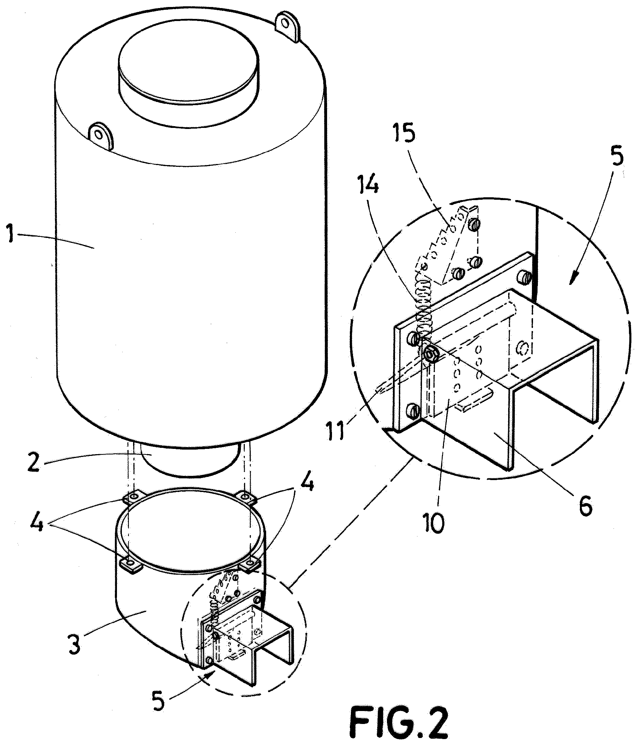

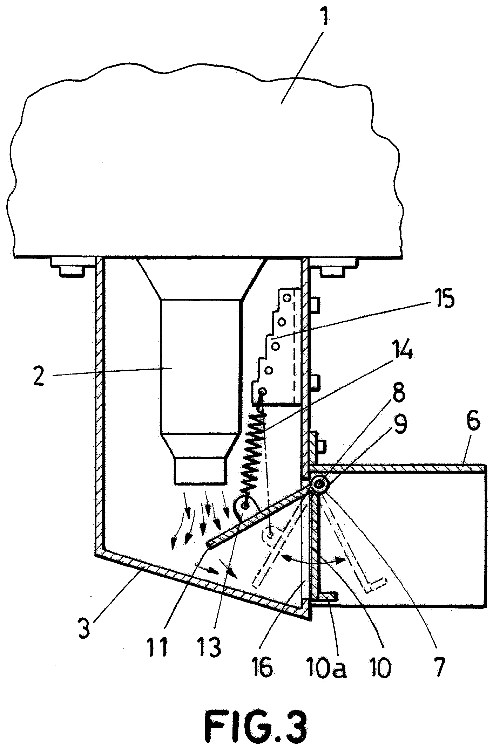

This case is shown in figures 2 and 3, wherein the device, in addition to the opening (5), also comprises a container (3), one end of which incorporates lugs (4) for fastening, by means of screws, to the tank (1) of an animal feeder. Due to its size and shape, the container (3) can be coupled to the base of the tank (1). The dispenser (2), preferably of the Moultrie type, is thus housed inside the container (3). In this way, the rations supplied by the dispenser (2) are housed inside the container (3) and are fed by gravity to a position between the second trap door (11) and the outlet orifice (16) so that when a boar pushes the first trap door (10) through the projection (10a), the second trap door (11) draws the food through the outlet orifice (16) to the outside.

In short, the process for extracting food is identical in two described embodiments of the device, as is the relationship between the opening (5) and the tank (1) or the container (3).

The food supply can be controlled by adjusting both the outlet hole of the dispenser (2) and the size of the second trap door (11). In this way, more or less food can exit, thus having an effect on the rate of consumption and also providing for the use of larger grains, such as maize, or smaller grains, such as wheat. This can be adjusted in three different ways:
- Large outlet orifice/large second trap door (11). With each push of the boar on the first trap door (10), the system ejects the food in large rations, without being a continuous supply.
- Small outlet orifice/small second trap door (11). With each push of the boar, the system ejects the food in small rations, without being a continuous supply.
- Large outlet orifice/small second trap door (11). With each push of the boar, the system ejects the food in large portions, or even continuously if the boar holds the trap door open for a few seconds, facilitating rapid emptying of the tank (1). This option is specially designed for when the system is used in combination with a programmable Moultrie dispenser, as in this case it is the dispenser that rations and avoids emptying the hopper.

Furthermore, to increase the effect of attracting boars, the first trap door (10) incorporates apertures (12), so that the smell of the food in the container (3) reaches the outside more effectively and attracts boars more easily. These apertures (12) are smaller than the size of the grain exiting the dispenser (2) so that food is not supplied in an uncontrolled manner. For the same purpose, the second trap door (11) can also incorporate apertures (12) when it is responsible for closing the outlet orifice (16), as occurs when the device is located at the base of the tank (1).

The configuration of the opening (5), with a frame (6) in the shape of a trough open on the lower side, and with the first trap door (10) at the bottom, makes the device particularly suitable for animals with an elongate and strong snout that allows them to both access the inside of the frame (6) and open the first trap door (10) by pushing it through the projection (10a) from the bottom upwards to overcome the resistance of the spring (14). This is exclusively the case for boars.

As shown in figures 2 and 3, the opening (5) can be installed on a side of the container (3), with the frame (6) closing the sides and the upper area to allow access to the boars from the lower area. It can be seen how this configuration of the opening (5), open at the lower area, also has the effect of protecting the system against the entry of rainwater that could wet the food and spoil it.

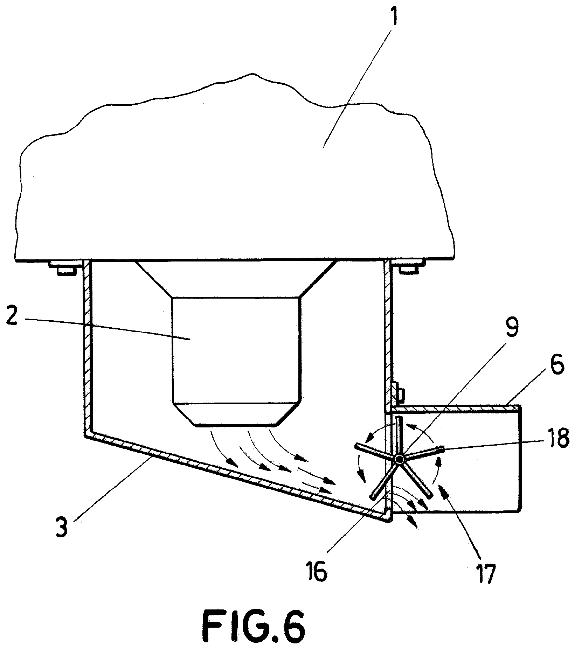

In a fourth embodiment of the invention, the food extracting mechanism of the opening (5), instead of being formed by two trap doors (10, 11), comprises a plurality of third trap doors (18), configuring a mechanism in the shape of a mill (17) wherein the third trap doors (18) form compartments between them. This situation is shown in figure 6, wherein it can be seen that, when a boar pushes the third trap doors (18) on the outside, those trap doors located on the inside sweep the food from the container (3) to move it outside.

In this fourth embodiment, some of the compartments between two of the third trap doors (18) may be blinded so that the mill (17) does not continuously sweep food.

These embodiments are based on the way boars forage for food by lifting their snout, so that pushing the projection (10a) or the third trap doors (18) of the mill (17) is a very natural movement that will also be supported by the reward of the food received.

The figures do not show the simplest embodiment of the invention, wherein the food extracting mechanism is solely made up of the first trap door (10), with the same configuration as indicated above, which is fastened to the inside of the tank (1) or container (3), depending on the configuration, with the spring (14), as is the case with the second trap door (11) to thus force the outlet orifice (16) to be always closed.

Moreover, the device can be manufactured in two sizes: normal for adult boars and small for young boars, the difference being the distance between the walls where the boars have to insert their snout.

Lastly, it must be taken into account that the present invention must not be limited by the embodiment described herein. Other configurations may be carried out by those skilled in the art based on the present description. Accordingly, the scope of the invention is defined by the following claims.

In short, the main advantages of the device of the invention are the following:
- It is a universal device that can be coupled to any tank (1), making it a feeder solely and exclusively for boars. The installation of the dispenser (2) is optional, although its incorporation provides even more versatility, allowing the rationing of food only for boars, which can convert any type of feeder worldwide into a feeder solely for boars.
- The qualitative leap is similar to that achieved at the time with the "Moultrie all-in-one" dispensers (2) which are now universally used in all countries. These dispensers (2) can be coupled to any tank (1), making them extremely appealing to users due to their simplicity and low cost.
- The device is the minimum viable product to establish a boar feeder, the cheapest and simplest mechanism possible.
- Nowadays, users are forced to buy complete assemblies, tanks (1) with the trap door (10, 11) incorporated, which are expensive.
- The double trap door (10, 11) system prevents food from pouring out and avoids spillage of all the food from the tank (1) if the boars hold the trap door (10, 11) up.
- The rotating mill system (17) also causes rationing and prevents food from continuously pouring out.
- The spring system allows the difficulty of opening the trap door (10, 11) to be adjusted.
- The system allows the opening to be adjusted.
- The device prevents other animals, both wild and domestic, from feeding without the feeder being suitable for them.

## Claims

1. A device for extracting food from a tank (1) of an animal feeder where it is designed to be fastened, the device being **characterised in that** it comprises an opening (5), which in turn comprises:
- a frame (6), formed by a U-shaped sheet that has a hole (7) located in each wing of the U-shape, and
- a food extracting mechanism that is fastened to the frame (6) with the ability to rotate,
wherein,
- the food extracting mechanism comprises a trap door (10, 11, 18) joined to a tube (9) to house a shaft (8) that is fastened to the frame (6) through the holes (7).

2. The device of claim 1, **characterised in that** when the tank (1) is joined to a dispenser (2), it comprises a container (3) designed to be fastened to the tank (1) by wrapping around the dispenser (2) to receive the food supplied,
wherein
- the container (3) comprises an outlet orifice (16)
- the frame (6) is fastened to the container (3) around the outlet orifice (16),
- the food extracting mechanism is located covering the outlet orifice (16).

3. The device of claim 1 or 2, **characterised in that** the food extracting mechanism comprises a first trap door (10).

4. The device of claim 1 or 2, **characterised in that** the food extracting mechanism comprises a first trap door (10) and a second trap door (11), firmly joined to the first trap door (10) by means of the tube (9), forming an angle.

5. The device of claim 3 or 4, **characterised in that** the first trap door (10) comprises apertures (12) so that the smell of the food reaches the outside.

6. The device of claim 4 and 5, **characterised in that** it comprises a spring (14) with the ends fastened to the second trap door (11) and to the tank (1) or to the container (3) via a coupling (15), such that the spring (14) presses the second trap door (11) and keeps the first trap door (10) pressed against the container (3), closing the outlet orifice (16).

7. The device of claim 1, **characterised in that** the food extracting mechanism comprises a plurality of third trap doors (18) evenly distributed around the tube (9) that form compartments, configuring a mill (17).

8. The device of claim 7, **characterised in that** at least one compartment between two third trap doors (18) is blind.

9. The device of claim 3, **characterised in that** it comprises a spring (14) with the ends fastened to the first trap door (10) and to the tank (1) or to the container (3) via a coupling (15), such that it keeps the outlet orifice (16) closed.

10. The device of any of claims 4 to 8, **characterised in that** the food extracting mechanism is located at the base of the tank (1).
